# EUROPEAN PATENT APPLICATION

(11) **EP 4 261 014 A2**
(43) Date of publication of application: **18.10.2023**
(21) Application number: 21905665.2
(22) Date of filing: 13.12.2021
(51) Int. Cl.: B29C 64/245, B33Y 30/00

(54) **LEVELING APPARATUS AND THREE-DIMENSIONAL PRINTING DEVICE**

(30) Priority: 14.12.2020 CN 202023003054 U
(71) Applicant: Shenzhen Anycubic Technology Co., Ltd., Shenzhen, Guangdong 518000 (CN)
(72) Inventor: HU, Guiyuan, Shenzhen, Guangdong 518000 (CN); OUYANG, Xin, Shenzhen, Guangdong 518000 (CN)
(74) Representative: Haseltine Lake Kempner LLP
(86) International application number: PCT/CN2021/137456
(87) International publication number: WO 2022/127736

(57) **Abstract**

A leveling device and a three-dimensional printing device. The leveling device (200) is used in the three-dimensional printing device. The three-dimensional printing device includes a cantilever (100) and a platform (300), and the leveling device (200). The leveling device includes a connecting piece (210) and an adjuster (220). One end of the connector (210) is provided with a spherical connecting part (230), and the other end of the connector (210) is detachably connected to the forming platform (300) of the three-dimensional printing device. The side of the cantilever (100) close to the connector (210) is recessed inwards to form an accommodating cavity, and the spherical connecting part (230) is fitted to the accommodating cavity and accommodated in the accommodating cavity. The adjuster (220) is able to move between a first position and a second position. The convenience of leveling the three-dimensional printing device forming platform (300) can thus be improved.

## Description

### TECHNICAL FIELD

The present disclosure relates to the technical field of three-dimensional printing, and in particular to a leveling device and a three-dimensional printing device.

### CROSS REFERENCE TO THE RELATED APPLICATIONS

The present application is a patent application which is a national stage application of a PCT International Application No. PCT/CN2021/137456 filed on December 13, 2021.

### BACKGROUND

The three-dimensional (3D) printing apparatus, also known as a 3 dimension printer (3DP), is a machine of cumulative manufacturing technology, i.e., rapid prototyping technology, and uses adhesive materials such as special wax and powdered metal or plastic on the basis of a digital model file, to manufacture a 3D object by sequentially printing multiple layers of adhesive materials.

During use of the 3DP for printing, it is necessary to align and attach the platform and a liquid crystal display (LCD) screen below the platform to print a standard object. In the prior art, an adjusting nut is mounted on the platform and the relative positions of the platform and the LCD screen are adjusted by means of the adjusting nut to level the platform. However, the way involves in tedious steps, and has large errors, and is likely to damage the screen during operations. It can be seen that the leveling way for the platform of an existing 3DP has poor convenience.

### SUMMARY

An embodiment of the present disclosure provides a leveling device and a three-dimensional printing device to solve the problem of poor convenience of existing ways for leveling a platform of a three-dimensional printing device.

In a first aspect, an embodiment of the present disclosure provides a leveling device for use in a three-dimensional printing device. The three-dimensional printing device includes a cantilever and a platform. The leveling device includes a connector and an adjuster, where one end of the connector is provided with a spherical connecting part, and the other end of the connector is detachably connected to the platform; a side of the cantilever close to the connector is recessed inwards to form a spherical accommodating cavity, and the spherical connecting part is fitted to the spherical accommodating cavity and is accommodated in the spherical accommodating cavity; and

the adjuster is movable between a first position in which the adjuster passes through the connector and is fixedly connected to the cantilever to fix the platform to the cantilever by means of the leveling device, and a second position in which the adjuster is separated from the cantilever to rotatably connect the platform and the cantilever by means of the leveling device.

Optionally, the connector includes a connecting column and a connecting block, the connecting column being configured as a cylinder, one end of the connecting column being fixedly connected to the spherical connecting part, a through hole fitted to the connecting column being provided in the connecting block, and the connecting column being partially accommodated in the through hole and being fixedly connected to the connecting block.

Optionally, the connecting column is configured as a cylinder, the spherical connecting part is provided with a first through hole corresponding to the connecting column, the first through hole is configured to penetrate the spherical connecting part. And a first threaded hole is provided in an inner wall of the spherical accommodating cavity; and
the adjuster is a screw, and in the first position, the adjuster sequentially passes through the through hole of the connecting block, the connecting column and the first through hole, and is fixedly connected to the cantilever by means of the first threaded hole, and the connector is fastened to the cantilever by means of a screw head of the adjuster.

Optionally, the adjuster is sleeved with a limiting component, the limiting component is configured as a circular ring having an inner diameter less than an outer diameter of the screw head of the adjuster and greater than an outer diameter of a screw rod of the adjuster, and in the first position, two ends of the limiting component are partially attached to an inner wall of the connecting column and the screw head of the adjuster respectively.

Optionally, a cantilever cover is provided between the connecting block and the cantilever, and the cantilever cover is sleeved on the connecting column and is fixedly connected to the cantilever.

Optionally, a first opening configured to be circular is provided in the cantilever cover, and has an inner diameter less than an outer diameter of the spherical connecting part and greater than an outer diameter of the connecting column.

Optionally, a bracket is provided between the connecting block and the platform, one end of the bracket is detachably connected to the connecting block, the other end of the bracket is detachably connected to the platform, and the connecting block is detachably connected to the platform by means of the bracket.

Optionally, the bracket includes a first fixing arm, a second fixing arm, and a fixing plate, where two ends of the fixing plate are fixedly connected to the first fixing arm and the second fixing arm respectively, and the first fixing arm and the second fixing arm are symmetrically arranged, and they are in threaded connection with the platform; and
a first orifice is provided in the fixing plate, the connecting block is provided with a second threaded hole corresponding to the first orifice, the connecting column is provided with a second orifice corresponding to the second threaded hole, and a first screw sequentially passes through the first orifice, the second threaded hole and the second orifice to fix the fixing plate to the connecting block.

Optionally, the connecting block is clamped by the first fixing arm and the second fixing arm, and the first fixing arm, the second fixing arm and the fixing plate are attached to three sides of the connecting block respectively.

Optionally, a third threaded hole is provided in the connecting block, the connecting column is provided with a fourth threaded hole corresponding to the third threaded hole, and a second screw sequentially passes through the third threaded hole and the fourth threaded hole to limit and fix the connecting block and the connecting column.

In a second aspect, an embodiment of the present disclosure provides a three-dimensional printing device, including a cantilever, a platform and the leveling device of the first aspect.

According to the embodiments of the present disclosure, the spherical connecting part arranged at one end of the connector of the leveling device is fitted to the spherical accommodating cavity of the cantilever, and the adjuster is displaced between the first position and the second position, such that the platform is fixed to the cantilever by means of the leveling device when the adjuster is located in the first position, and the platform is rotatably connected to the cantilever by means of the leveling device when the leveling device is located in the second position, with the spherical connecting part as a rotation reference point. Since a user only needs to adjust a position of the adjuster to the second position during operation to allow the platform to be rotated in various directions with the spherical connecting part as the reference point, and the position of the adjuster is adjusted to the first position after leveling is completed, to complete fixing of the platform, the position of the platform of the three-dimensional printing device can be rapidly and accurately adjusted, thereby improving the convenience of leveling the platform of the three-dimensional printing device.

### BRIEF DESCRIPTION OF THE DRAWINGS

In order to more clearly illustrate the technical solutions of the embodiments of the present disclosure, the accompanying drawings required for the description of the embodiments of the present disclosure will be briefly described below. Obviously, the accompanying drawings in the following description are only some embodiments of the present disclosure, and a person skilled in the art can further obtain other accompanying drawings based on the accompanying drawings without involving any inventive effort.
FIG. 1 is a schematic structural diagram of a three-dimensional printing device according to an embodiment of the present disclosure;
FIG. 2 is first schematic sectional structural diagram of the three-dimensional printing device according to an embodiment of the present disclosure;
FIG. 3 is an exploded view of FIG. 2;
FIG. 4 is a partial schematic structural diagram of an adjusting assembly according to an embodiment of the present disclosure;
FIG. 5 is a second schematic sectional structural diagram according to an embodiment of the present disclosure;
FIG. 6 is an partial enlarged view of FIG. 5; and
FIG. 7 is a schematic diagram of a combined structure of a bracket and a platform according to an embodiment of the present disclosure.

### DETAILED DESCRIPTION OF THE EMBODIMENTS

The technical solutions of the embodiments of the present disclosure will be clearly and completely described below with reference to the accompanying drawings for the embodiments of the present disclosure; and obviously, the embodiments described are some, rather than all, of the embodiments of the present disclosure. Based on the embodiments of the present disclosure, all other embodiments obtained by those of ordinary skill in the art without involving any inventive effort shall fall within the scope of protection of the present disclosure.

Unless defined otherwise, the technical or scientific terms used in the present disclosure shall have the common meanings as understood by those of ordinary skill in the art to which the present disclosure relates. "First", "second", or the like used in the present disclosure do not represent any order, quantity or importance, but are only used to distinguish different components. Similarly, similar words such as "a" and "an" do not represent a quantitative limitation, but represent the presence of at least one. Similar words such as "connect" or "connected" are not limited to physical or mechanical connection, and can include electrical connection, whether direct or indirect. The terms such as "upper", "lower", "left", "right" are only used to indicate the relative positional relation that can change accordingly when the absolute position of a described object changes.

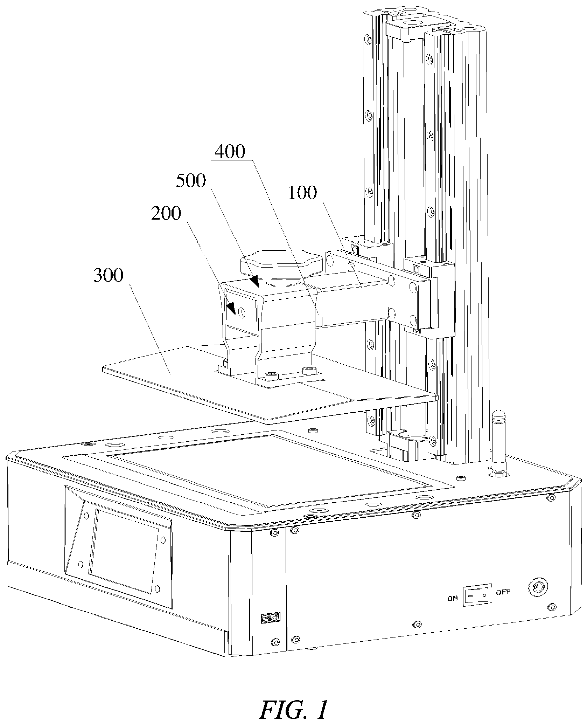

With reference to FIGS. 1 - 7, an embodiment of the present disclosure provides a leveling device for use in a three-dimensional printing device. The three-dimensional printing device includes a cantilever 100 and a platform 300. The leveling device 200 includes a connector 210 and an adjuster 220, where the connector 210 is provided with a spherical connecting part 230 at one end, and detachably connected to the platform 300 at the other end. A side of the cantilever 100 close to the connector 210 is recessed inwards to form a spherical accommodating cavity, and the spherical connecting part 230 is fitted to the spherical accommodating cavity and is accommodated in the spherical accommodating cavity.

The adjuster 220 is movable between a first position in which the adjuster 220 passes through the connector 210 and is fixedly connected to the cantilever 100 to fix the platform 300 to the cantilever 100 by means of the leveling device 200, and a second position in which the adjuster 220 is separated from the cantilever 100 to rotatably connect the platform 300 and the cantilever 100 by means of the leveling device 200.

With reference to FIG. 1, FIG. 1 is a partial schematic structural diagram of a three-dimensional printing device provided in an embodiment of the present disclosure. The cantilever 100 described above can slide on a vertically arranged rail by means of a linear slider to drive the platform 300 to get close to or away from a screen. In the operation of the three-dimensional printing device, the platform 300 is attached to a bottom end of a container arranged on the screen, then the platform 300 is gradually moved away from the screen by means of traction of a stepping motor, and material in the container are gradually molded by means of cooperation of the platform 300 and the screen due to a photo-curing effect. Therefore, before the three-dimensional printing device starts to operate, it is necessary to adjust the platform 300 to a position in which the platform 300 is smoothly attached to the bottom end of the container arranged on the screen by means of the leveling device 200 and fix the platform 300, so as to avoid deviation during a printing process.

In the embodiment of the present disclosure, the spherical connecting part 230 arranged at one end of the connector 210 can be accommodated in the spherical accommodating cavity formed by inwards recessing a first side surface of the cantilever 100, and the spherical connecting part 230 can rotate in the spherical accommodating cavity to drive the connector 210 to rotate on the basis of the spherical connecting part 230.

It should be understood that in order to facilitate mounting of the spherical connecting part 230 and the spherical accommodating cavity, the first side surface of the cantilever 100can be provided with a circular opening fitted to the spherical connecting part 230, and after the spherical connecting part 230 is accommodated in the spherical accommodating cavity, the spherical connecting part 230 can be limited to rotate only in the spherical accommodating cavity without displacement by means of a cover plate and other fixing members.

Alternatively, in an optional implementation, a section of cylindrical channel fitted to the spherical connecting part 230 can be further provided between the first side surface and the spherical accommodating cavity to mount the spherical connecting part 230 in the spherical accommodating cavity through the cylindrical channel, and a distance by which the spherical connecting part 230 is displaced in a direction along the cylindrical channel can be limited by providing the cover plate.

In another optional implementation, the spherical connecting part 230 can also be integrally processed and formed with the spherical accommodating cavity, such that a diameter of the opening provided in the first side surface can be less than that of the spherical connecting part 230, and the spherical connecting part 230 can rotate in the spherical accommodating cavity and can not be displaced due to the limitation by the opening.

The way in which the connector 210 and the platform 300 are connected can be set according to actual needs. In the embodiment of the present disclosure, connections can include, but are not limited to, threaded connection, buckle connection or bonding, which is not further limited herein.

The adjuster 220 can be displaced in a first direction to implement fixation and separation between the adjuster and the cantilever 100. Specifically, in one embodiment of the present disclosure, the adjuster 220 can be fixed to the cantilever 100 by means of threaded connection; and in another embodiment of the present disclosure, the adjuster 220 can be fixed to the cantilever 100 by means of buckling being triggered by a buckle, which can be specifically configured according to actual needs.

It should be understood that the adjuster 220 can pass through the connector 210 and be fixedly connected to the cantilever 100 and fix the connector 210 to the cantilever 100. For example, a threaded through hole is provided in the connector 210, the cantilever 100 is correspondingly provided with a threaded hole, and the adjuster 220 passes through the threaded hole of the connector 210 to match the threaded hole of the cantilever 100 for fixing, such that the connector 210 and the cantilever 100 are fixed without rotation.

As another example, a through hole can be provided in each of the connector 210 and the spherical connecting part 230, one end of the adjuster 220 can pass through the connector 210 to match the threaded hole provided in the cantilever 100, and the other end of the adjuster can be a screw head to compress and fix the connector 210 and the cantilever 100.

After the adjuster 220 is unscrewed from the threaded hole in the cantilever 100, the connector 210 can rotate on the basis of the spherical connecting part 230 since the adjuster 220 is separated from the cantilever 100.

Materials of the connector 210 and the spherical connecting part 230 can be provided according to actual needs. In the embodiment of the present disclosure, in order to increase the strength of the connector 210 and the spherical connecting part 230 and prevent rusting, the connector 210 and the spherical connecting part 230 can be made of a stainless steel material. Of course, in other optional embodiments, the connector 210 and the spherical connecting part 230 can be made of copper or other metal materials, or can be made of plastic, which will not be further limited.

According to the embodiment of the present disclosure, the spherical connecting part 230 arranged at one end of the connector 210 of the leveling device 200 is fitted to the spherical accommodating cavity of the cantilever 100, and the adjuster 220 is displaced between the first position and the second position, such that the platform 300 is fixed to the cantilever 100 by means of the leveling device 200 when the adjuster 220 is located in the first position, and the platform 300 is rotatably connected to the cantilever 100 by means of the leveling device 200 when the leveling device 200 is located in the second position, with the spherical connecting part 230 as a rotation reference point. Since a user only needs to adjust a position of the adjuster 220 to the second position during operation to allow the platform 300 to be rotated in various directions with the spherical connecting part 230 as the reference point, and the position of the adjuster 220 is adjusted to the first position after leveling is completed, to complete fixing of the platform 300, the position of the platform of the three-dimensional printing device can be rapidly and accurately adjusted, thereby improving the convenience of leveling the platform of the three-dimensional printing device.

Optionally, the connector 210 includes a connecting column 211 and a connecting block 212, where the connecting column 211 is configured as a cylinder, one end of the connecting column is fixedly connected to the spherical connecting part 230, a through hole fitted to the connecting column 211 is provided in the connecting block 212, and the connecting column 211 is partially accommodated in the through hole and is fixedly connected to the connecting block 212.

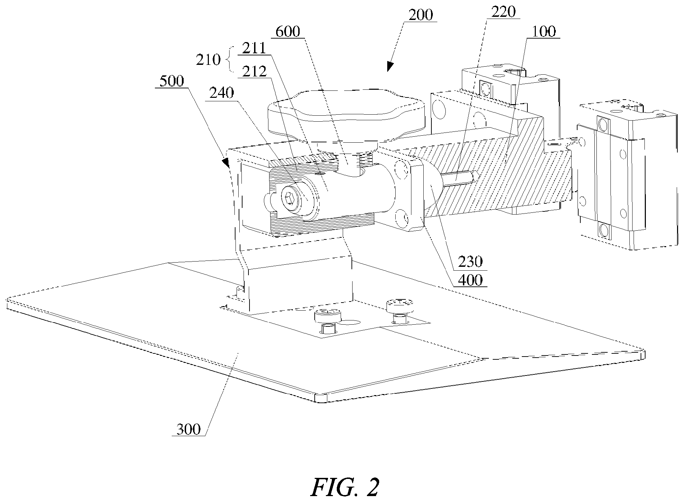

With reference to FIGS. 2 - 4, in an embodiment of the present disclosure, in order to facilitate mounting and dismounting and to easily rotate the connector 210 on the basis of the spherical connecting part 230, the connector 210 can include a connecting column 211 and a connecting block 212, where the connecting column 211 can be configured as a cylinder, one end of the connecting column 211 can be fixedly connected to the spherical connecting part 230, and the connecting column can freely rotate at an opening provided in the cantilever 100 by configuring the connecting column 211 as a cylinder, thereby facilitating the rotation of the connector 210 in various directions. It should be understood that in order to implement the rotation of the connecting column 211 on the basis of the spherical connecting part 230, the connecting column 211 can have a smaller outer diameter than an outer diameter of the spherical connecting part 230.

The connecting block 212 can be configured as a cuboid, thereby facilitating detachable connection with the platform 300. In order to reduce space occupation, the connecting block 212 can be provided with a through hole fitted to the connecting column 211, so as to partially accommodate the connecting column 211 in the through hole, thereby reducing the length of the connector 210.

The ways in which the connecting block 212 is connected to the connecting column 211 can be configured according to actual needs. For example, in order to facilitate mounting and dismounting, in an optional implementation, the connecting block 212 can be fixed to the connecting column 211 by means of a screw screwed from a side surface.

Of course, in other optional embodiments, the connecting column 211 may not be located in the through hole, but may be fixedly connected to the connecting block 212 by means of welding, etc., or can be integrally formed with the connecting block 212.

Similarly, the spherical connecting part 230 can be fixedly connected to the connecting column 211 by means of welding. Of course, the spherical connecting part 230 can be integrally formed with the connecting column 211, thereby improving the overall strength.

Optionally, the connecting column 211 is configured to be cylindrical, the spherical connecting part 230 is provided with a first through hole corresponding to the connecting column 211, the first through hole is configured to penetrate the spherical connecting part 230, and a first threaded hole is provided in an inner wall of the spherical accommodating cavity; and

the adjuster 220 is a screw, and in the first position, the adjuster 220 sequentially passes through the through hole of the connecting block 212, the connecting column 211 and the first through hole, and is fixedly connected to the cantilever 100 by means of the first threaded hole, and the connector 210 is fastened to the cantilever 100 by means of a screw head of the adjuster 220.

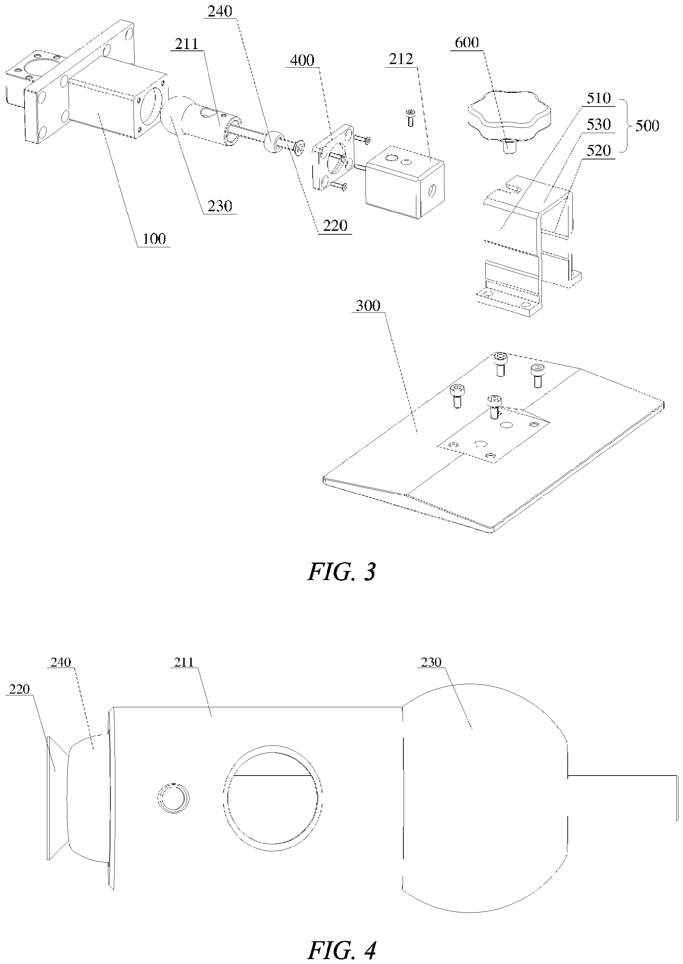

With reference to FIGS. 3 and 4, in an embodiment of the present disclosure, the adjuster 220 can be a screw, and fits and is fixed in a first threaded hole of the adjuster 220 in the first position. The adjuster 220 can sequentially pass through the through hole of the connecting block 212, the connecting column 211 and the first through hole, and the connector 210 is fastened to the cantilever 100 by means of the screw head of the adjuster 220, thereby fixing the connector 210 to the cantilever 100 in the first position.

It can be understood that inner diameters of the through hole of the connecting block 212, the connecting column 211 and the first through hole are greater than an outer diameter of a screw rod of the adjuster 220, such that the adjuster 220 can still pass through the through hole of the connecting block 212, the connecting column 211 and the first through hole to fit the first threaded hole when the connector 210 rotates by a certain angle.

When the adjuster 220 is unscrew from the first position to the second position, the adjuster 220 is separated from the first threaded hole, such that the connector 210 is rotatable.

According to the embodiment of the present disclosure, the adjuster 220 sequentially passes through the through hole of the connecting block 212, the connecting column 211 and the first through hole, and is fixedly connected to the cantilever 100 by means of the first threaded hole, and the connector 210 and is fastened to the cantilever 100 by means of the screw head of the adjuster 220, such that the movement of the adjuster 220 between the first position and the second position provides fixed and rotatable connection of the connector 210 and the cantilever 100, which improves the convenience of adjusting the position of the platform 300.

Further, the adjuster 220 can be sleeved with a limiting component 240, the limiting component 240 is configured as a circular ring having an inner diameter less than an outer diameter of the screw head of the adjuster 220 and greater than an outer diameter of a screw rod of the adjuster 220, and in the first position, two ends of the limiting component 240 are partially attached to an inner wall of the connecting column 211 and the screw head of the adjuster 220 respectively.

In the embodiment of the present disclosure, after the connector 210 rotates by a certain angle, an included angle is formed between the first threaded hole and a channel formed by the through hole of the connecting block 212, the connecting column 211 and the first through hole and the first threaded hole. In order to avoid the situation where the adjuster 220 can not be vertically screwed into the first threaded hole due to the included angle, the adjuster 220 can be sleeved with the limiting component 240 configured as the circular ring, and the circular ring has the inner diameter less than the outer diameter of the screw head of the adjuster 220 and slightly greater than the outer diameter of the screw rod of the adjuster 220.

In this way, when the connector 210 rotates by a certain angle, during the movement of the adjuster 220 from the first position to the second position, one end of the limiting component 240 abuts against an inner wall of the connecting column 211, and the same angle as a the angle by which the connector 210 has rotated is adaptively formed between the limiting component and an end surface of the connecting column 211, such that the adjuster 220 can be guided by means of an inner ring of the circular ring to be vertically screwed into the first threaded hole, thereby further improving the convenience in leveling.

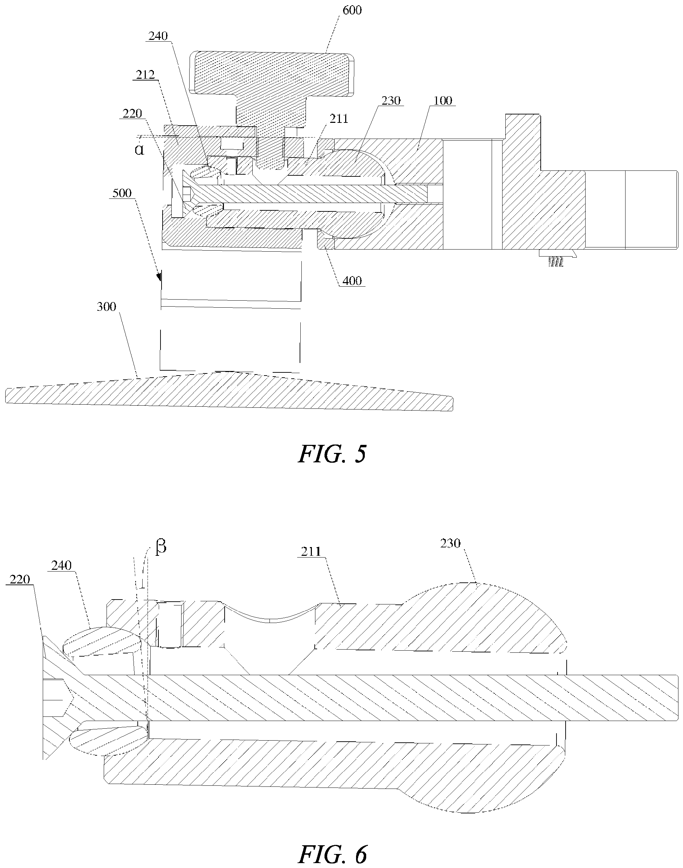

With reference to FIGS. 5 and 6, FIG. 6 is a partial enlarged view of FIG. 5. An angle α in FIG. 5 is a possible rotation angle for the connector 210, the limiting component 240 can rotate counterclockwise as in FIG. 6 after the connector 210 rotates by the angle α, and an angle β in FIG. 6 is a possible rotation angle for the limiting component 240, where the angle α is equal to the angle β. In this way, the adjuster 220 still remains horizontal, such that the adjuster 220 can still be vertically screwed into the first threaded hole when the connector 210 is rotated by a certain angle.

Optionally, a cantilever cover 400 is provided between the connecting block 212 and the cantilever 100, and the cantilever cover 400 is sleeved on the connecting column 211 and is fixedly connected to the cantilever 100.

In the embodiment of the present disclosure, the cantilever cover 400 can be fixed to the cantilever 100 by means of a screw, such that the spherical connecting part 230 can be limited to the movement in an extension direction of the connecting column 211 by means of the cantilever cover 400 and only rotates in the spherical accommodating cavity.

It can be understood that since the cantilever cover 400 is arranged between the connecting block 212 and the cantilever 100, in order to enable the connector 210 to rotate on the basis of the spherical connecting part 230, a certain gap can be provided between the cantilever cover 400 and the connecting block 212, such that a position of the connector can not be blocked by the cantilever cover 400 when the connector 210 rotates within a certain angle.

Further, a first opening configured to be circular is provided in the cantilever cover 400, and has an inner diameter less than an outer diameter of the spherical connecting part 230 and greater than an outer diameter of the connecting column 211.

In the embodiment of the present disclosure, the connecting column 211 can pass through the first opening, and the first opening has the inner diameter greater than the outer diameter of the connecting column 211, such that the connector 210 can rotate within a certain angle under the limitation of the first opening, and damages to the liquid crystal display (LCD) screen caused by an excessive rotation angle of the platform 300 can be prevented.

Optionally, a bracket 500 is provided between the connecting block 212 and the platform 300, one end of the bracket 500 is detachably connected to the connecting block 212, the other end of the bracket is detachably connected to the platform 300, and the connecting block 212 is detachably connected to the platform 300 by means of the bracket 500.

In the embodiment of the present disclosure, the platform 300 is easy to dismount, such that a three-dimensionally printed product is easy to removed, and the connecting block 212 can be detachably connected to the platform 300 by means of the bracket 500.

Further, the bracket 500 can include a first fixing arm 510, a second fixing arm 520, and a fixing plate 530, where two ends of the fixing plate 530 are fixedly connected to the first fixing arm 510 and the second fixing arm 520 respectively, and the first fixing arm 510 and the second fixing arm 520 are symmetrically arranged and the first fixing arm 510 and the second fixing arm 520 are in threaded connection with the platform 300; and

A first orifice 531 is provided in the fixing plate 530, the connecting block 212 is provided with a second threaded hole 2122 corresponding to the first orifice, the connecting column 211 is provided with a second orifice corresponding to the second threaded hole, and a first screw 600 sequentially passes through the first orifice, the second threaded hole and the second orifice to fix the fixing plate 530 to the connecting block 212.

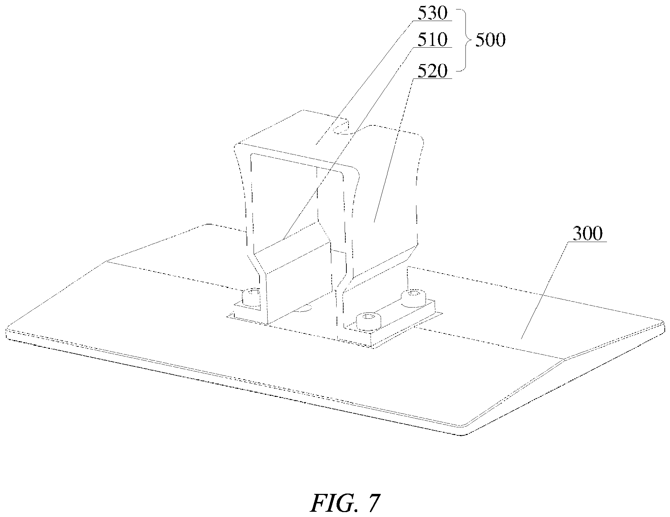

With reference to FIG. 7, in an embodiment of the present disclosure, the bracket 500 can be configured to be substantially U-shaped and includes the first fixing arm 510, the second fixing arm 520 and the fixing plate 530. The bracket 500 can be fixedly connected to the platform 300 by means of the first fixing arm 510 and the second fixing arm 520, and is detachably connected to the connecting block 212 by means of the fixing plate 530. In this way, it is only necessary to unscrew a first screw 600 to disconnect the bracket 500 from the connector 210, such that the platform 300 is easily removed.

Optionally, a handle can be provided on a side of the first screw 600 away from the fixing plate 530 to facilitate screwing and unscrewing the first screw 600.

The ways in which the first fixing arm 510 and the second fixing arm 520 are connected to the platform 300 can be configured according to actual needs. In an optional implementation, the first fixing arm 510 and the second fixing arm 520 can be fixed to the platform 300 by means of welding. Of course, in other embodiments, the first fixing arm 510 and the second fixing arm 520 can be detachably connected to the platform 300 by means of screws.

Further, in order to prevent the platform 300 from waggling during rotation, the connecting block 212 is clamped by the first fixing arm 510 and the second fixing arm 520, and the first fixing arm 510, the second fixing arm 520 and the fixing plate 530 can be attached to three sides of the connecting block 212 respectively.

Optionally, in order to fix the connecting block 212 and the connecting column 211 partially accommodated in the through hole of the connecting block 212, a third threaded hole can be provided in the connecting block 212, a fourth threaded hole corresponding to the third threaded hole is provided in the connecting column 211, and a second screw sequentially passes through the third threaded hole and the fourth threaded hole to limit and fix the connecting block 212 and the connecting column 211.

An embodiment of the present disclosure further provides a three-dimensional printing device, including a cantilever 100, a platform 300, and the leveling device of any one of the above embodiments. Since the three-dimensional printing device provided in the embodiment of the present disclosure uses all the technical solutions of the above embodiments, all the beneficial effects brought by the technical solutions of the above embodiments are at least provided, which will not be repeated one by one herein.

The above descriptions are merely particular embodiments of the present disclosure, but the scope of protection of the present disclosure is not limited thereto. Any changes or substitutions that can be readily conceived by those skilled in the art within the technical scope disclosed by the present disclosure shall fall within the scope of protection of the present disclosure. Therefore, the scope of protection of the present disclosure should be determined by the scope of protection of the claims.

## Claims

1. A leveling device for use in a three-dimensional printing device, the three-dimensional printing device comprising a cantilever and a platform, wherein the leveling device comprises a connector and an adjuster, one end of the connector is provided with a spherical connecting part, and the other end of the connector is detachably connected to the of the three-dimensional printing device; a side of the cantilever close to the connector is recessed inwards to form a spherical accommodating cavity, and the spherical connecting part is fitted to the spherical accommodating cavity and is accommodated in the spherical accommodating cavity; and
the adjuster is movable between a first position in which the adjuster passes through the connector and is fixedly connected to the cantilever to fix the to the cantilever by means of the , and a second position in which the adjuster is separated from the cantilever to rotatably connect the and the cantilever by means of the leveling apparatus.

2. The leveling device according to claim 1, wherein the connector comprises a connecting column and a connecting block, the connecting column being configured as a cylinder, one end of the connecting column being fixedly connected to the spherical connecting part, a through hole fitted to the connecting column being provided in the connecting block, and the connecting column being partially accommodated in the through hole and being fixedly connected to the connecting block.

3. The leveling device according to claim 2, wherein the connecting column is configured as a cylinder, the spherical connecting part is provided with a first through hole corresponding to the connecting column, and a first threaded hole is provided in an inner wall of the spherical accommodating cavity; and
the adjuster is a screw, and in the first position, the adjuster sequentially passes through the through hole of the connecting block, the connecting column and the first through hole, and is fixedly connected to the cantilever by means of the first threaded hole, and the connector is fastened to the cantilever by means of a screw head of the adjuster.

4. The leveling device according to claim 3, wherein the adjuster is sleeved with a limiting member, the limiting component is configured as a circular ring having an inner diameter less than an outer diameter of the screw head of the adjuster and greater than an outer diameter of a screw rod of the adjuster, and in the first position, two ends of the limiting component are partially attached to an inner wall of the connecting column and the screw head of the adjuster respectively.

5. The leveling device according to claim 2, wherein a cantilever is provided between the connecting block and the cantilever, and the cantilever cover (400) is sleeved on the connecting column and is fixedly connected to the cantilever.

6. The leveling device according to claim 5, wherein a first opening configured to be circular is provided in the cantilever cover, and has an inner diameter less than an outer diameter of the spherical connecting part and greater than an outer diameter of the connecting column.

7. The leveling device according to claim 2, wherein a bracket is provided between the connecting block and the platform (300), one end of the bracket (500) is detachably connected to the connecting block, the other end of the bracket (500) is detachably connected to the platform (300), and the connecting block is detachably connected to the platform (300) by means of the bracket (500).

8. The leveling device according to claim 7, wherein the bracket (500) includes a first fixing arm, a second fixing arm, and a fixing plate, wherein two ends of the fixing plate are fixedly connected to the first fixing arm and the second fixing arm respectively, and the first fixing arm and the second fixing arm are symmetrically arranged, the first fixing arm (510) and the second fixing arm (520) are in threaded connection with the platform (300); and
a first orifice is provided in the fixing plate, the connecting block is provided with a second threaded hole corresponding to the first orifice, the connecting column is provided with a second orifice corresponding to the second threaded hole, and a first screw sequentially passes through the first orifice, the second threaded hole and the second orifice to fix the fixing plate to the connecting block.

9. The leveling device according to claim 2, wherein a third threaded hole is provided in the connecting block, the connecting column is provided with a fourth threaded hole corresponding to the third threaded hole, and a second screw sequentially passes through the third threaded hole and the fourth threaded hole to limit and fix the connecting block and the connecting column.

10. A three-dimensional printing device, comprising a cantilever, a platform (300), and the leveling device (200) of any one of claims 1-9.
